# EUROPEAN PATENT APPLICATION

(11) **EP 2 208 978 A2**
(43) Date of publication of application: **21.07.2010**
(21) Application number: 10000422.5
(22) Date of filing: 18.01.2010
(51) Int. Cl.: G01L 3/10

(54) **Compact magnetic torque sensing systems**

(30) Priority: 16.01.2009 US 355332
(71) Applicant: MG Global Technology Operations, Inc., Detroit, MI 48265-3000 (US)
(72) Inventor: Islam, Mohammad S., Saginaw MI 48603 (US); Islam, Mohammad R., Saginaw MI 48603 (US); Mielke, Matt, Freeland MI 48623 (US)
(74) Representative: Manitz, Finsterwald & Partner GbR

(57) **Abstract**

A torque sensor system comprising, an inner tooth (107), an outer tooth (109) disposed on an outer yoke member (111) centered on an axis spaced radialy from the inner tooth, a plate member (114), a retainer member (113) operative to retain the outer yoke member and the plate member, a magnet member (102) centered on the axis disposed between the inner tooth and the outer tooth, an air gap (115) partially defined by the plate member and the outer yoke member, and a magnetosensitive element (118) disposed in the air gap operative to sense a magnetic flux induced by an angular displacement of the magnet member relative to the inner tooth and the outer tooth.

## Description

### BACKGROUND

Determining a relative position (angular displacement) of two shafts is beneficial in control systems. The relative positions of shafts may be used to determine a torque induced on components.

For example, power steering systems use a torque applied to one shaft to control a torque applied to a second shaft. The amount of torque applied to the first shaft may be determined by an angle displacement sensor.

Previous angle displacement sensors use a rotor having a ring magnet that is attached to a first shaft. The ring magnet is surrounded by a stator assembly having teeth that is attached to a second shaft. When a torque is applied to the first shaft, magnetic flux crosses from the ring magnet to the teeth and forms a differential flux across an air gap in the stator assembly. The differential flux is proportional to the relative angular displacement between the first and second shafts. The differential flux is measured by a magnetosensitive element, such as, for example, a Hall Effect sensor. The measurement of the differential flux is used to determine the torque applied to the ring magnet.

Previous torque sensors are relatively large, sensitive to mechanical build variations and expensive to manufacture. A compact, reliable, and easily manufactured position sensor that is insensitive to mechanical variation that may be used to sense torque on a shaft is desired.

### SUMMARY

The above described and other features are exemplified by the following Figures and Description in which a torque sensor system comprising, an inner tooth, an outer tooth disposed on an outer yoke member centered on an axis spaced radialy from the inner tooth, a plate member, a retainer member operative to retain the outer yoke member and the plate member, a magnet member centered on the axis disposed between the inner tooth and the outer tooth, an air gap partially defined by the plate member and the outer yoke member, and a magnetosensitive element disposed in the air gap operative to sense a magnetic flux induced by an angular displacement of the magnet member relative to the inner tooth and the outer tooth.

An alternate embodiment of a torque sensor system comprising, an inner tooth, an outer tooth disposed on an outer yoke member centered on an axis spaced radialy from the inner tooth, a retainer member operative to retain the outer yoke member, a magnet member centered on the axis disposed between the inner tooth and the outer tooth, a lower flux collector, an upper flux collector, an air gap partially defined by the lower flux collector and the upper flux collector, and a magnetosensitive element disposed in the air gap operative to sense a magnetic flux induced by an angular displacement of the magnet member relative to the inner tooth and the outer tooth.

### BRIEF DESCRIPTION OF THE DRAWINGS

Referring now to the Figures wherein like elements are numbered alike:

FIG. 1 illustrates a partially cut-away perspective view of a torque sensor.

FIG. 2 illustrates a perspective view of an exemplary embodiment of the inner teeth, the inner yoke, the outer teeth, the outer yoke, the cover, and the retainer assembly of FIG. 1.

FIG. 3 illustrates a top down cut away view of a portion of the torque sensor of FIG. 1.

FIG. 4 illustrates a graph of the performance curves of the magnetic portion of FIG. 1.

FIG. 5 illustrates a perspective partially cut away view of an alternate embodiment of a torque sensor.

FIG. 6 illustrates a perspective view of the shaft and inner teeth of FIG. 5.

FIG. 7 is a perspective view of another alternate exemplary embodiment of a torque sensor.

FIG. 8 is a perspective view of another alternate exemplary embodiment of a torque sensor.

### DETAILED DESCRIPTION

Torque sensors are used to determine an amount of torque applied to a shaft. Previous torque sensors used expensive components such as, for example, sintered NdFeB magnets and were undesirably large as well as being sensitive to mechanical build variations. Embodiments of a compact and less expensive torque sensor that is insensitive to build variations are described below.

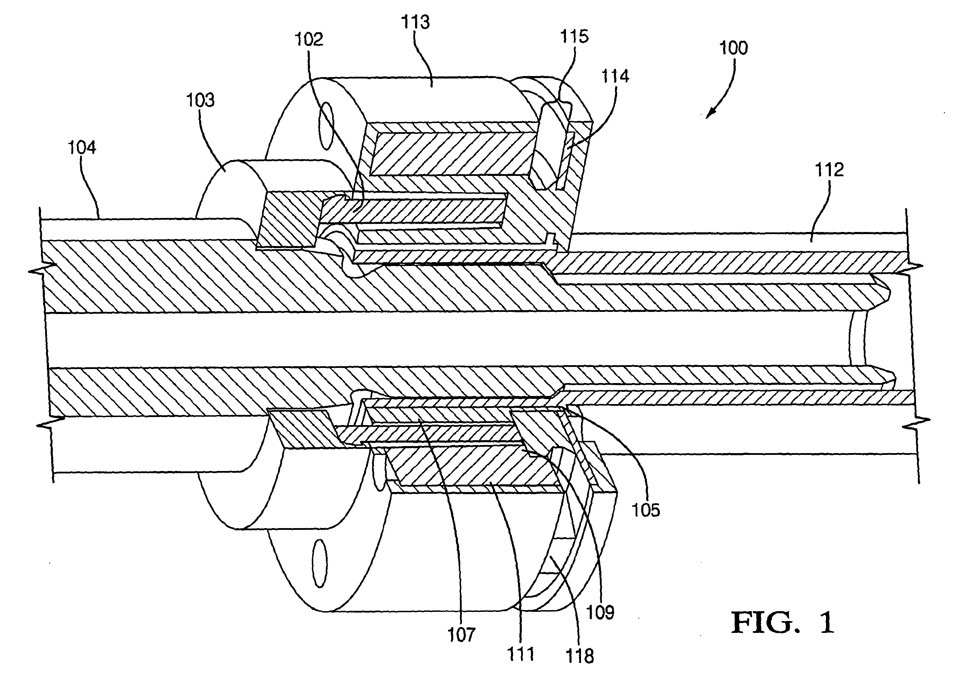

In this regard, FIG. 1 illustrates a partially cut-away perspective view of a magnetic portion of a torque sensor 100. The torque sensor 100 includes a multi-pole magnet 102 connected to a first shaft 104 with a magnet retainer 103. The magnet 102 is disposed between an inner pole portion and an outer pole portion. The inner pole portion includes inner teeth 107 that are formed on an inner yoke 105, and the outer pole portion includes outer teeth 109 formed on an outer yoke 111. The inner yoke 105 is connected to a second shaft 112. The inner yoke 105 and the outer yoke 111 are connected with a non-magnetic retainer 113 that may be formed by, for example, over molded plastic material. The retainer secures a cover 114. A measurement gap (air gap) 115 is defined by the outer yoke 111, the retainer 113, and the cover 114. A magnetosensitive element 118, such as, for example, one or more Hall Effect sensors is disposed in the airgap 115 and remains stationary relative to the rotation of the retainer 113, the cover 114, and the shafts 104 and 112. The magnetosensitive element 118 may be connected to a processor (not shown) that receives signals from the magnetosensitive element 118.

The illustrated embodiment includes a magnet 102 that may include, for example a ring magnet, an arcuate magnet, or other shaped magnets. The magnet 102 may be formed from any type of magnetic material, for example, NdFeB, SmCo or ferrite. The magnet 102 may be manufactured using various techniques, for example, sintering, compression molding or injection molding. The yokes and teeth may be formed from ferrous metal, for example, laminate SiFe or powdered metal SiFe. The shafts 104 and 112 may be formed from, for example, machined steel stock.

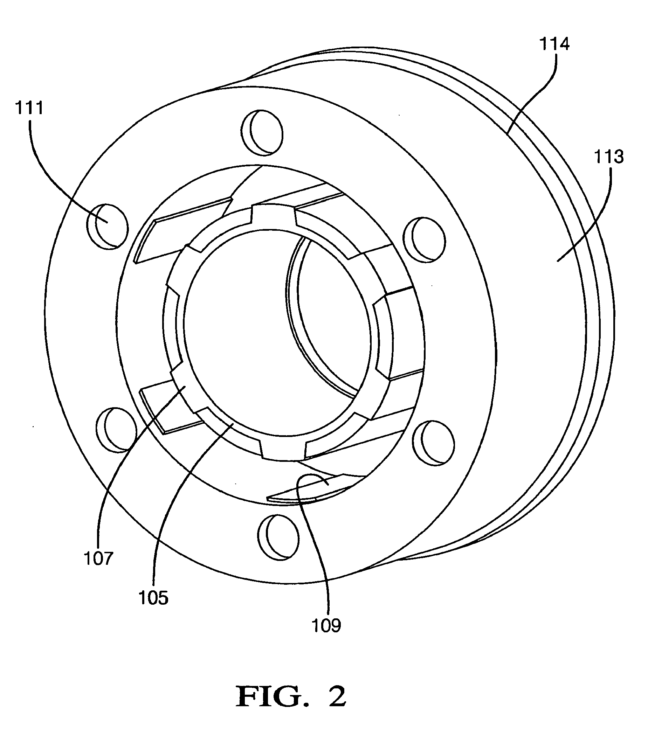

FIG. 2 illustrates perspective view of an exemplary embodiment of the inner teeth 107, inner yoke 105, the outer teeth 109, the outer yoke 111, the cover 114, and the retainer 113 assembly.

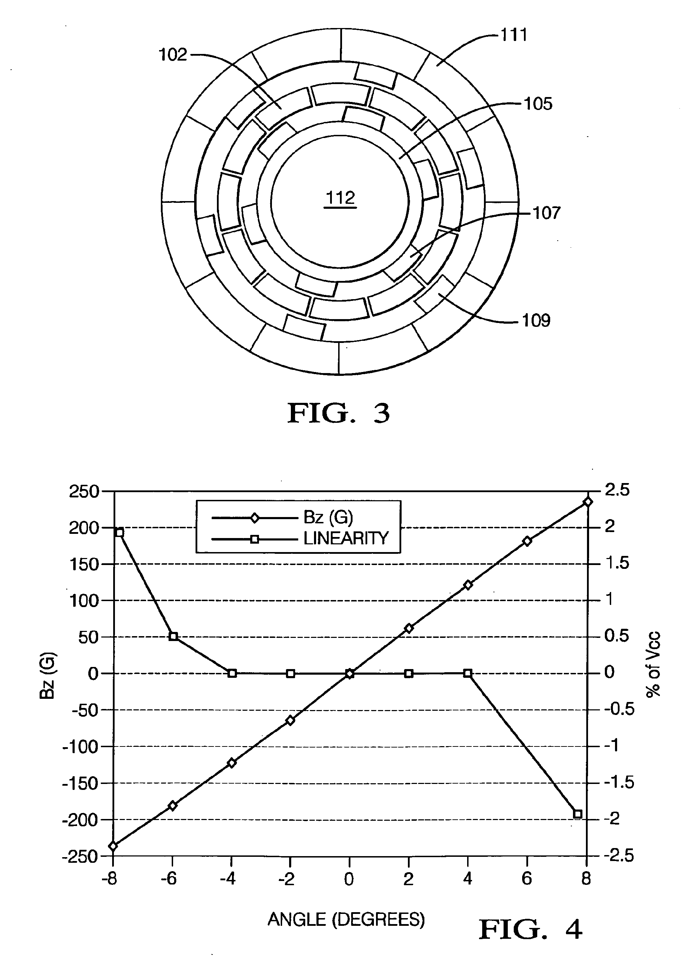

FIG. 3 illustrates a top down cut away view of the inner teeth 107, inner yoke 105, the outer teeth 109, the outer yoke 111, the magnet 102, and the second shaft 112. In operation, when the magnet 102 is in the position shown in FIG. 3, the net flux in the air gap 115 is zero. When a torque is applied to the first shaft 104 (of FIG. 1), the first shaft 104 turns the magnet 102 relative to the inner teeth 107 and the outer teeth 109. As the magnet 102 moves relative to the inner teeth 107 and the outer teeth 109, a non-zero net magnetic flux flows through the air gap 115. The magnitude of the net magnetic flux changes proportionally to the angle between the magnet 102 and the inner teeth 107 and the outer teeth 109. The polarity of the net magnetic flux in the air gap 115 is dependent on the direction of rotation between the magnet 102 and the inner teeth 107 and the outer teeth 109. For example, if the net magnetic flux in the air gap 115 is positive when the magnet 102 rotates clockwise relative to the inner teeth 107 and the outer teeth 109 then the net magnetic flux in the air gap 115 is negative when the magnet 102 rotates counterclockwise relative to the inner teeth 107 and the outer teeth 109.

Referring to FIG. 1, in the zero net flux position (the position shown in FIG. 3) 50% of the magnetic flux flows in a path from the magnet 102 through the inner teeth 107, through the inner yoke 105, through the second shaft 112 through the cover 114, across the airgap 115 to the outer yoke 111 through the outer teeth 109, and back to the magnet 102. The other 50% of the magnetic flux flows in an opposing path from the magnet 102 through the outer teeth 109, through the outer yoke 111, across the air gap 115 to the cover 114, through the second shaft 112 to the inner yoke 105 and inner teeth 107, and back to the magnet 102. In a zero torque condition, no net flux is present in the air gap 115; as the magnet 102 rotates relative to the inner teeth 107 and the outer teeth 109, the net flux increases or decreases dependent on the rotation of the magnet 102 relative to the inner teeth 107 and the outer teeth 109, the increase and decrease in net flux is measured by the magnetosensitive element 118. The magnetosensitive element 118 measures changes in the magnetic flux. In the illustrated embodiment, the magnetosensitive element 118 outputs a voltage that varies with the magnitude and direction of the net flux. The net flux measurement is used to determine the torque applied to the first shaft 102.

FIG. 4 illustrates an example of the performance curves of the torque sensor 100. As the angle of displacement (between the magnet 102 and the inner teeth 107 and the outer teeth 109) changes, the net flux in measurement gap 115 changes. The resultant net flux in measurement gap 115 is highly linear to approximately 4 degrees of angular displacement with the linearity increasing slightly at angles beyond 4 degrees.

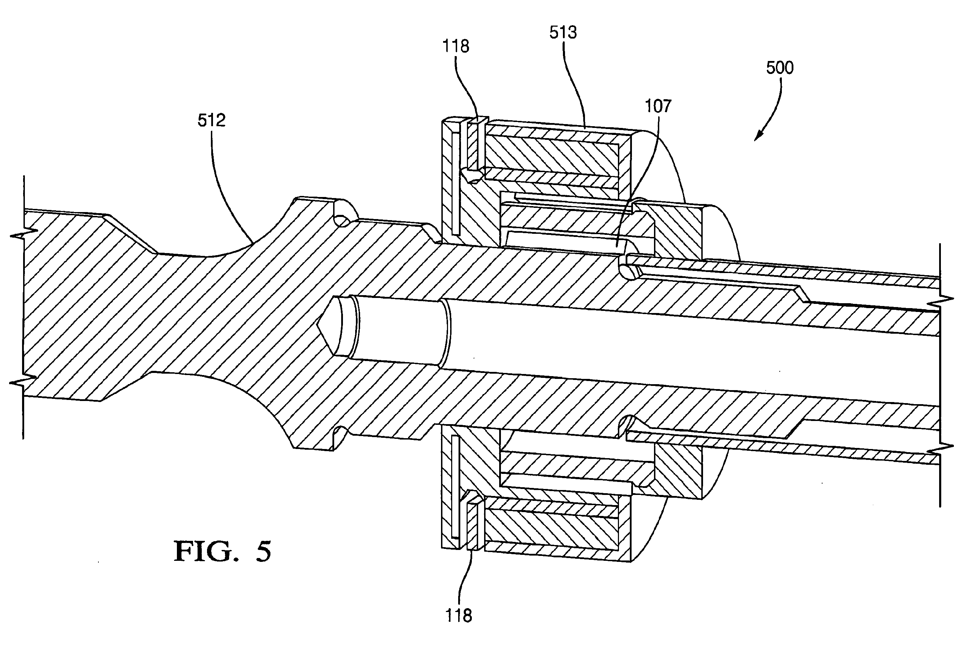

FIG. 5 illustrates perspective partially cut away view of an alternate embodiment of a torque sensor 500. The torque sensor 500 is similar in operation to the torque sensor 100 (of FIG. 1) described above. However, the torque sensor 500 includes inner teeth 107 that are formed on the second shaft 512. The inner teeth 107 may be formed on the second shaft 512 using, for example, a machining process. The torque sensor 500 does not include an inner yoke 111. The retainer 513 is connected to the outer yoke 511, the cover 114 and the second shaft 512.

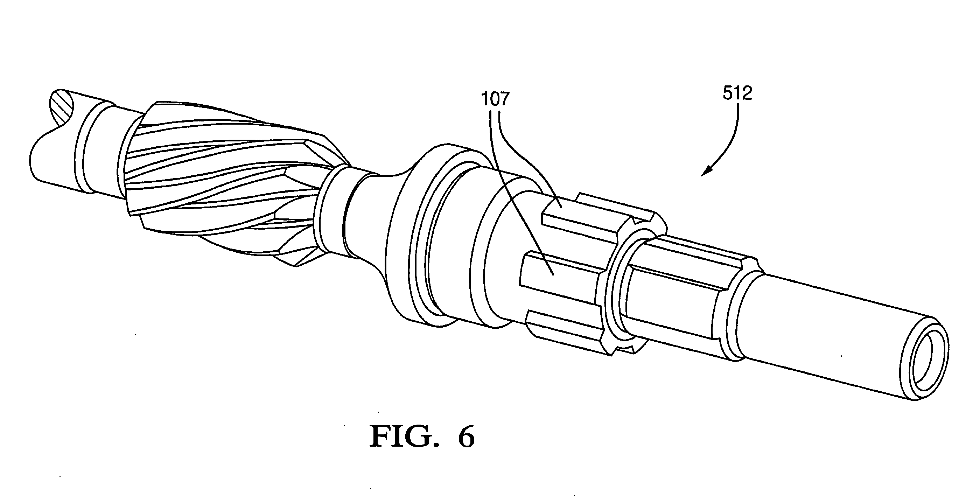

FIG. 6 illustrates a perspective view of the shaft 512 (of FIG. 5) and inner teeth 107.

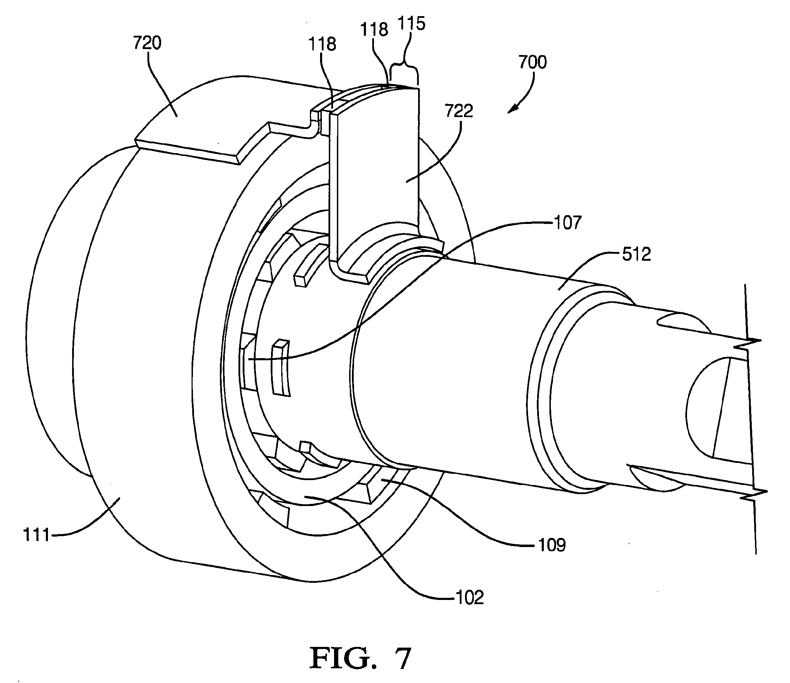

FIG. 7 is a perspective view of an alternate exemplary embodiment of a torque sensor 700. The torque sensor 700 is similar in operation to the torque sensors described above. The illustrated embodiment includes the shaft 512, however embodiments may alternatively include the shaft 112 and inner yoke 111 and inner teeth 107 as described above in FIG. 1. The torque sensor 700 includes a lower flux collector 720 that is spaced from the outer yoke 111 by a small air gap of, for example, 1mm. The torque sensor 700 includes an upper flux collector 722 that is spaced from the second shaft 512 by a small air gap of, for example, 1mm. The air gap 115 is partially defined by the lower flux collector 720 and the upper flux collector 722. The magnetosensitive elements 118 are disposed in the air gap 115. The lower flux collector 720 and the upper flux collector 722 are retained by a housing member (not shown). The air gap 115 defines a radial arc, for example, 60 degrees.

In operation torque applied to the second shaft 512 rotates the inner teeth, the outer yoke 111, and the outer teeth 109 that are connected with a retainer (not shown). The housing member and the lower flux collector 720 and the upper flux collector 722 remain stationary relative to the rotation of the second shaft 512, the inner teeth 107, the outer yoke 111, and the outer teeth 109. The torque sensor 700 provides an increase in the net flux in the air gap 115 as the angle of displacement (between the magnet 102 and the inner teeth 107, and the outer teeth 109) changes by concentrating the net flux in a smaller angular area, than the torque sensor 100. The torque sensor 700 provides better rotational accuracy. The design of the torque sensor 700 allows for more variation in the placement of magnetosensitive elements 118 without affecting the performance of the torque sensor 700 in terms of linearity and rotational accuracy.

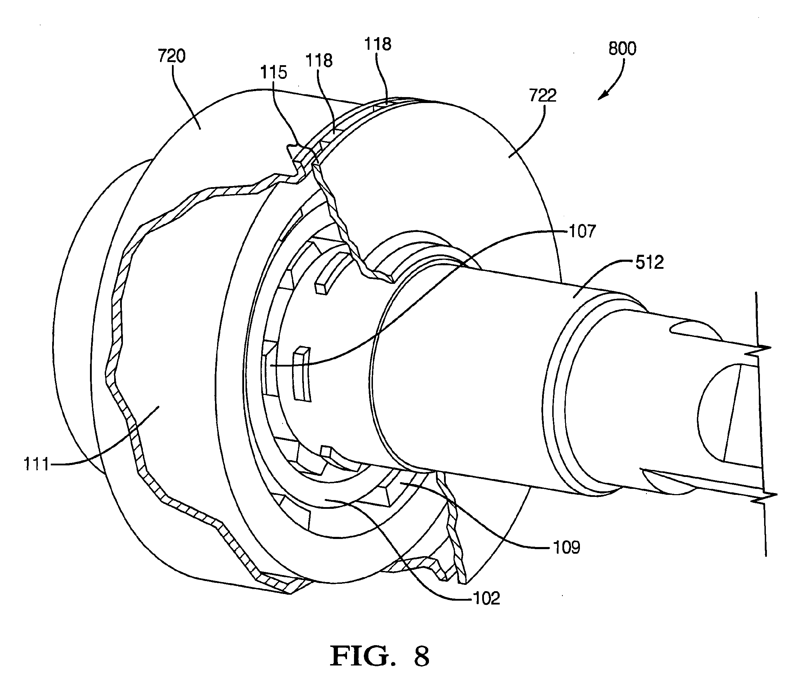

FIG. 8 illustrates an alternate exemplary embodiment of a torque sensor 800. The torque sensor is similar in operation to the torque sensor 700 described above. The torque sensor 800 includes the lower flux collector 720 and the upper flux collector 722 that defme the air gap 115 that extends in a 360 degree radial arc.

The technical effects and benefits of the system and methods described above allow the measurement of torque applied to a shaft.

While the invention has been described with reference to exemplary embodiments, it will be understood by those of ordinary skill in the pertinent art that various changes may be made and equivalents may be substituted for the elements thereof without departing from the scope of the present disclosure. In addition, numerous modifications may be made to adapt the teachings of the disclosure to a particular object or situation without departing from the essential scope thereof. Therefore, it is intended that the Claims not be limited to the particular embodiments disclosed as the currently preferred best modes contemplated for carrying out the teachings herein, but that the Claims shall cover all embodiments falling within the true scope and spirit of the disclosure.

## Claims

1. A torque sensor system comprising:
an inner tooth;
an outer tooth disposed on an outer yoke member centered on an axis spaced radialy from the inner tooth;
a plate member;
a retainer member operative to retain the outer yoke member and the plate member;
a magnet member centered on the axis disposed between the inner tooth and the outer tooth;
an air gap partially defined by the plate member and the outer yoke member; and
a magneto sensitive element disposed in the airgap operative to sense a magnetic flux induced by an angular displacement of the magnet member relative to the inner tooth and the outer tooth.

2. The system of claim 1, wherein the system further comprises a first shaft connected to the magnet member.

3. The system of claim 1, wherein the system further comprises a second shaft connected to the inner tooth.

4. The system of claim 1, wherein the system further comprises a second shaft connected to the retainer member.

5. The system of claim 1, wherein the system further comprises:
an inner yoke member connected to the inner tooth, wherein the retainer member is further operative to retain the inner yoke member; and
a second shaft connected to the inner yoke member.

6. The system of claim 1, wherein the magnetosensitive element is a Hall Effect sensor.

7. The system of claim 1, wherein the magnetic flux is indicative of an angular displacement between the magnet member and the inner tooth and the outer tooth.

8. The system of claim 7, wherein the angular displacement of the magnet member relative to the inner tooth and the outer tooth is induced by a torque applied to a second shaft connected to the inner tooth and the outer tooth.

9. The system of claim 1, wherein the magnet member is a ring magnet and includes a pair of magnetic poles.

10. The system of claim 1, wherein the magnet member includes a pair of discrete magnets.

11. A torque sensor system comprising:
an inner tooth;
an outer tooth disposed on an outer yoke member centered on an axis spaced radialy from the inner tooth;
a retainer member operative to retain the outer yoke member;
a magnet member centered on the axis disposed between the inner tooth and the outer tooth;
a lower flux collector;
an upper flux collector;
an air gap partially defined by the lower flux collector and the upper flux collector; and
a magnetosensitive element disposed in the air gap operative to sense a magnetic flux induced by an angular displacement of the magnet member relative to the inner tooth and the outer tooth.

12. The system of claim 11, wherein the system further comprises a first shaft connected to the magnet member,
and/or wherein the system further comprises a second shaft connected to the inner tooth,
and/or wherein the system further comprises a second shaft connected to the retainer member,
and/or wherein the system further comprises:
an inner yoke member connected to the inner tooth, wherein the retainer member is further operative to retain the inner yoke member; and
a second shaft connected to the inner yoke member.

13. The system of claim 11, wherein the magnetosensitive element is a Hall Effect sensor.

14. The system of claim 11, wherein the magnetic flux is indicative of an angular displacement between the magnet member and the inner tooth and the outer tooth,
in particular wherein the angular displacement of the magnet member relative to the inner tooth is induced by a torque applied to a second shaft connected to the inner tooth.

15. The system of claim 11, wherein the magnet member is a ring magnet and includes a pair of magnetic poles,
and/or wherein the inner tooth, the outer tooth, the retainer member, the magnet member rotate relative to the upper flux collector and the lower flux collector.
